# EUROPÄISCHE PATENTSCHRIFT

(11) **EP 1 038 094 B1**
(45) Veröffentlichungstag und Bekanntmachung des Hinweises auf die Patenterteilung: **07.05.2003**
(21) Anmeldenummer: 98966514.6
(22) Anmeldetag: 09.12.1998
(51) Int. Cl.: F01K 25/00, F02C 1/10

(54) **MEHRSTUFIGER DAMPFKRAFT-/ARBEITSPROZESS FÜR DIE ELEKTROENERGIEGEWINNUNG IM KREISPROZESS SOWIE ANORDNUNG ZU SEINER DURCHFÜHRUNG**
MULTISTEP STEAM POWER OPERATING METHOD FOR GENERATING ELECTRIC POWER IN A CYCLE AND DEVICE FOR THE IMPLEMENTATION THEREOF
PROCEDE DE MISE EN ACTION DE FORCE MOTRICE A VAPEUR MULTI-ETAGE POUR LA PRODUCTION D'ENERGIE ELECTRIQUE DANS UN CYCLE ET DISPOSITIF POUR LA MISE EN OEUVRE DE CE PROCEDE

(30) Priorität: 09.12.1997 DE 19754660; 28.01.1998 DE 19803048; 28.01.1998 DE 19803049; 01.04.1998 DE 19814510; 24.09.1998 DE 19843848
(43) Veröffentlichungstag der Anmeldung: 27.09.2000
(73) Patentinhaber: Rerum Cognitio, 08066 Zwickau (DE)
(72) Erfinder: HARAZIM, Wolfgang, D-08060 Zwickau (DE)
(74) Vertreter: Auerbach, Bettina
(86) Internationale Anmeldenummer: DE9803617
(87) Internationale Veröffentlichungsnummer: WO99030018

(56) Entgegenhaltungen:
- WO-A-97/06352
- US-A- 4 148 185
- US-A- 5 177 952
- US-A- 5 331 806
- PATENT ABSTRACTS OF JAPAN vol. 097, no. 010, 31. Oktober 1997 & JP 09 151750 A (MITSUBISHI HEAVY IND LTD), 10. Juni 1997
- PATENT ABSTRACTS OF JAPAN vol. 097, no. 010, 31. Oktober 1997 & JP 09 144559 A (MITSUBISHI HEAVY IND LTD), 3. Juni 1997
- PATENT ABSTRACTS OF JAPAN vol. 097, no. 005, 30. Mai 1997 & JP 09 004418 A (MITSUBISHI HEAVY IND LTD), 7. Januar 1997
- JERICHA H ET AL: "WEiTERENTWICKLUNG DES H2/02-DAMPFPROZESSES (BRENNKAMMER UND HOCHTEMPERATURTURBINE)" VGB KRAFTWERKSTECHNIK, Bd. 73, Nr. 9, 1. September 1993, Seiten 781-786, XP000396380

## Beschreibung

Die Erfindung betrifft einen mehrstufigen Dampfkraft-/ arbeitsprozeß für die Elektroenergiegewinnung im Kreisprozeß durch Einsatz eines zusätzlichen gasförmigen Energieträgers zur Druck-, Temperatur- und Masseerhöhung des Arbeitsfluids im Kraftprozeß und Rückführung des Arbeitsfluids in den Arbeitsprozeß. *Der Kreisprozeß wird dabei durchgehend mit Wasserdampf als Arbeitsfluid durchgeführt. Die Umwandlung der gespeicherten Energie des Arbeitsfluides sowie des zusätzlichen gasförmigen Energieträgers in mechanische Energie wird mittels einer Gasturbinenanlage vorgenommen. Als zusätzliches dampfförmiges Arbeitsfluid wird das Umsetzungsprodukt aus der Knallgasreaktion eingesetzt.*
Eine derartige technische Lösung wird in erster Linie im Bereich der Energiewirtschaft benötigt.

Bei der Umwandlung von thermischer in mechanischer Energie ist der Wirkungsgrad auf Maximalwerte begrenzt, die durch die Temperaturen der Verbrennung, des bei der Verbrennung beigesetzten Abgases und der eingesetzten Kühlmittel bestimmt sind. Materialtechnische Grenzen in den angewendeten Energieumwandlungsprozessen beeinflussen die Differenz zwischen dem theoretisch erreichbaren und dem praktisch realisierten Wirkungsgrad nach dem jeweiligen Stand der Technik. Da die Turbomaschinenforschung bereits an einem sehr hohen Entwicklungsniveau angelangt ist, resultieren spürbare Verbesserungsmöglichkeiten im wesentlichen aus der Thermodynamik der Kreisprozesse.
Ausgehend von den maximalen Verbrennungstermperaturen müssen nach dem bisherigen Wissensstand die allgemeinen Temperaturen im Energieumwandlungsprozeß erhöht werden, um den Exergieanteil zu erhöhen. Bei Einsatz fossiler Brennstoffe im Gasturbinenprozeß haben die hohen Verbennungstemperaturen zudem Einfluß auf die Stickoxidemission.

Großtechnisch haben sich zur Gewinnung von elektrischer Energie der Dampfturbinen-Clausius-Rankine-Kreisprozeß, der Gasturbinenkreisprozeß und der Gas- und Dampf-Kombiprozeß (GuD-Prozeß) als die Kombination von beiden Grundprozessen durchgesetzt.
Mittels moderner Dampfkraftprozesse sollen durch Druck- und Temperaturerhöhungen des Arbeitsfluids auf über 300 bar und über 700 °C die angestrebten Wirkungsgradverbesserungen erreicht werden. Dies setzt zugleich voraus, daß materialtechnische Lösungen für die Beherrschung dieser Prozeßparameter gefunden werden.
Mittels moderner Gasturbinenprozesse wird angestrebt, die Turbineneinsatztemperaturen auf über 1500 °C anzuheben und die Standfestigkeit des eingesetzten Materials durch adäquate technische Lösungen zur Maschinenkühlung zu erreichen.
In bekannten Gas- und Dampf-Kombiprozessen (GuD) profitiert man von den technischen Entwicklungen auf den Gebieten beider Grundprozesse.
Im Bestreben, die angezielten Wirkungsgradverbesserungen bei der Energieumwandlung zu erreichen, wurde versucht, Lösungen zur günstigeren Gestaltung der Energieumwandlungsprozesse durch Nutzung von Kreisprozessen zu finden.
So beschreibt die US 3 841 100 einen geschlossenen Gasturbinenprozeß, unter Einsatz von verschiedenen Gasen, wie Luft, Wasserstoff, Helium oder anderen Gasen, bei dem der Arbeitsprozeß in einem Turbokompressor und der Kraftprozeß in einer Gasturbine stattfindet. Die angestrebte Wirkungsgradverbesserung soll dabei durch den Einsatz eines außergewöhnlich großen Kühlmittelreservoires erreicht werden, mit dessen Hilfe die verbesserte Kühlkapazität von Umgebungsluft wärend der Nachtzeit nutzbar gemacht wird. Gleichzeitig soll damit der durchgehende Betrieb der Anlage bei Nennlast sichergestellt werden. Dies verdeutlicht, mit welchen großen technischen Aufwendungen um die Gewinnung verhältnismäßig kleiner Wirkungsgradverbesserungen gerungen wird.

*Eine weitere technische Lösung wird mit der Japan 09151750 bekannt gemacht. Auch hierbei handelt es sich um die Kombination einer mehrstufigen Turboverdichteranlage mit einer mehrstufigen Turbinenanlage.*

*Die erste Stufe der Turbinenanlage wird dabei zusätzlich durch die gasförmigen Umsetzungsprodukte einer Knallgasreaktion beschickt, während die übrigen Turbinenestufen mit verdichteten Wasserdampf aus unterschiedlichen Verdichter- und Turbinenstufen betrieben werden. Die letzte Turbinenstufe der den Generator antreibenden Dampfturbine wird zudem mit einem dampfförmigen Arbeitsfluid beaufschlagt, das als Abdampf einer externen Kondensationsturbinenstufe gewonnen und durch die Restwärme des entspannten Dampfes der vorletzten Stufe der den Generator treibenden Dampfturbine aufgeheizt wird. Das überschüssige Arbeitsfluid, das aus den Umsetzungsprodukten der Knallgasreaktion resultiert, wird einem der Kondensationsturbinenstufe nachgeschalteten Kondensator entnommen. Diesem Kondensator wird gleichfalls die Wassermenge entnommen, die für die Zwischenkühlung des Arbeitsfluids zwischen den Verdichtungsstufen des Turboverdichters benötigt wird. Die Nachteile dieser technischen Lösung bestehen insbesondere in der Verwendung von insgesamt drei nur über das Arbeitsfluid verbundenen Aggregaten. Die verfahrens- und apparatetechnisch aufwendige Verschaltung führt möglicherweise zu einer energetischen Effizienzverbesserung, die jedoch wenigstens teilweise vom erhöhten technischen Aufwand kompensiert wird.*

Es ist deshalb Aufgabe der Erfindung, den geschlossenen Kreisprozeß zur Gewinnung von elektrischer Energie so weiterzuentwickeln, daß die Mängel des bekannten Standes der Technik überwunden werden und zugleich Wirkungsgradverbesserungen erreicht werden können. Die allgemeinen Druckund Temperaturanforderungen des eingesetzten Arbeitsfluids sollen gegenüber bekannten Techniken deutlich reduzierbar sein.

Gleichzeitig wird angestrebt trotz schwankender Lastanforderungen die zu entwickelnde technische Lösung mit den Voraussetzungen für den durchgehenden Betrieb unter Nennleistung auszustatten.

Die Aufgabe wird erfindungsgemäß durch die Merkmale der Ansprüche 1 und 6 gelöst.
Danach wird ein mehrstufiger Dampfkraft- und -arbeitsprozeß für die Elektroenergiegewinnung im Kreisprozeß durch Einsatz eines zusätzlichen gasförmigen Energieträgers zur Druck-, Temperatur- und Masseerhöhung des Arbeitsfluids im Kreisprozeß und Rückführung des Arbeitsfluids in den Kreisprozeß so gestaltet, daß als Arbeitsfluid durchgehend überhitzter Wasserdampf eingestezt wird.
Mit dieser Wahl des Arbeitsfluids werden die günstigen Eigenschaften des Wasserdampfes bezüglich der spezifischen Wärme, bezüglich der spezifischen Druckverluste und bezüglich des Wärmeübergangskoeffizienten nutzbar gemacht.
Der Kraftprozeß wird in einer geschlossen mehrstufigen Gasturbinenanlage durchgeführt, wobei der eingesetzte Wasserdampf in der angewendeten überhitzten Form ein zunehmend gasähnlicheres Verhalten zeigt.
Das Arbeitsfluid wird vor der Inbetriebnahme und nach der Außerbetriebnahme in einem zwischen der Kraft- und der Arbeitsmaschine angeordneten Arbeitsfluid-Speichergefäß als Kondensat gespeichert. Dieses Arbeitsfluid-Speichergefäß ist dazu mit technischen Mitteln zur bedarfsweisen Verdampfung des Kondensats bzw. zur Kühlung des Wasserdampfes ausgestattet.
Die vorgeschlagene technische Lösung ist weiterhin dadurch gekennzeichnet, daß die Umwandlung der gespeicherten Energie des Arbeitsfluids und des zusätzlich eingesetzten gasförmigen Energieträgers in mechanische Energie mittels einer geschlossenen Gasturbinenanlage vorgenommen wird. Die Aufrechterhaltung des Kreisprozesses wird durch den Einsatz von Wasserstoff und Sauerstoff als zusätzlichem gasförmigen Energieträger und dem entstehenden Wasserdampf aus der in der Gasturbine ablaufenden Knallgasreaktion *in Form der Verbrennung von Wasserstoff und Sauerstoff zu Wasserdampf* ermöglicht.

Das aus der inneren Verbrennung des eingesetzten Wasserstoffs und Sauerstoffs resultierende zusätzliche dampfförmige Arbeitsfluid wird als überhitzter Wasserdampf zum Zwecke der Druck-, Temperatur- und Masseerhöhung des gesamten Arbeitsfluids direkt an der Beschaufelung der mehrstufigen Gasturbine zum Einsatz gebracht. Durch die Verlagerung der Knallgasreaktionen in die einzelnen Stufen der mehrstufigen Gasturbine werden bei minimalen Übertragungsverlusten die dabei entstehenden hohen Drücke und Temperaturen für den Kraftprozeß nutzbar gemacht, ohne das allemeine Druck- und Temperaturniveau im gesamten Kreisprozeß aufrechterhalten zu müssen.
Nach der Entspannung in der Gasturbine wird der eingesetzte überhitzte Wasserdampf als Arbeitsfluid gemeinsam mit dem überhitzten Wasserdampf als dem Umsetzungsprodukt aus der gesteuerten Knallgasreaktion der Verdichtungsstufe des Kreisprozesses zugeführt.
Es ist erfindungswesentlich, daß die thermische Energie des entspannten Gasturbinenabdampfes mittels Wärmetauscher zur Vorüberhitzung des verdichteten Heißdampfes als Arbeitsfluid verwendet wird. Dabei erfolgt zugleich die wünschenswerte Kühlung des Arbeitsfluids vor dessen Einsatz in den vorgesehenen Turboverdichter.
Wesentliche Anteile der Kühlaufgaben im Kreisprozeß werden damit durch den Wärmetausch zwischen dem entspannten Arbeitsfluid hoher Temperatur und dem verdichteten Arbeitsfluid niedriger Temperatur abgedeckt.

In einer Ausführungsform der Erfindung wird das Arbeitsfluid zwischend er Kraft- und Arbeitsmaschine in einem Arbeitsfluid-Speichergefäß durch äußere Energiezuführung vor der Anlageninbetriebnahme verdampft. In diesem Falle liegt das Arbeitsfluid im Arbeitsfluid-Speichergefäß in Form von Dampfkondensat vor.

In einer anderen Ausführungsform ist vorgesehen, das überschüssige Arbeitsfluid, welches etwa der Menge des aus der Verbrennungsreaktion von Wasserstoff und Sauerstoff entstehenden Wasserdampfes entspricht, zwischen der Kraftmaschine und der Arbeitsmaschine aus dem Kreisprozeß zu entnehmen.

Grundsätzlich ist damit der gesamte Kreisprozeß für die Abführung überschüssigen Arbeitsfluids geeignet, wobei entsprechend der konkreten Anforderungen an die wirtschftliche Nutzung des entnommenen Arbeitsfluids, beispielsweise für Heizzwecke, auch der für die Turbinenkühlung eingesetzte verdichtete Wasserdampf aus dem Kreisprozeß ausgeschleust werden kann.

Es ist auch möglich, überschüssige Anteile der im Kreisprozeß gewonnenen elektrischen Energie zur Erzeugung von Wasserstoff und Sauerstoff einzusetzen. Dies bietet sich insbesondere an, wenn trotz verminderter Lastanforderungen im Interesse der Nutzung höchstmöglicher Wirkungsgrade der Kreisprozeß unter Nennlast aufrechterhalten wird.

Es ist ebenfalls vorgesehen, zum Zwecke der Wellen- und Schaufelkühlung der Gasturbine ausgekoppelte Anteile des Arbeitsfluids in Form von Wasserdampf aus der Verdichtungsstufe des Kreisprozesses zu verwenden.

Die Vorteile der vorgeschlagenen verfahrenstechnischen Lösung bestehen zusammengefaßt darin, daß unter Vermeidung von Luftschadstoffen der Kreisprozeß durchgehend mit überhitzten Wasserdampf als Arbeitsfluid betrieben werden kann, ohne auf die bekannten technischen Vorteile des Gasund Dampf-Kombiprozesses verzichten zu müssen. Der Vorteil besteht darüber hinaus darin, daß das allgemeine Druck- und Temperaturniveau im geschlossenen Kreisprozeß gegenüber vergleichbaren technischen Anlagen deutlich vermindert ist. Dies ermöglicht kostengünstigere maschinentechnische Lösungen, die zudem eine erhöhte Dauerstandsfestigkeit aufweisen können. Die vorteilhaften physikalischen Eigenschaften von überhitztem Wasserdampf sind darüber hinaus entscheidende Voraussetzungen für vergleichsweise kleine spezifische Abmessungen der Anlagenkomponenten, wie Arbeits- und Kraftmaschine, verbindende Rohrleitungen oder Wärmetauscherflächen.

Die vorgeschlagene Anordnung zur Durchführung des mehrstufigen Dampfkraft- und -arbeitsprozesses gemäß des beschriebenen Verfahrens besteht aus einer mehrstufigen Gasturbine als Kraftmaschine und einem auf der Turbinenwelle angeordneten mehrstufigen Turboverdichter als Arbeitsmaschine sowie aus den verbindenden Rohrleitungen zur Kreislaufführung des Arbeitsfluids.

Dabei sind an den einzelnen Turbinenstufen in unmittelbarer Nähe der Beschaufelung Zuführungseinrichtungen für gasförmigen Wasserstoff und gasförmigen Sauerstoff angeordnet.
Zwischen der Arbeits- und der Kraftmaschine ist ein zur Wärmeübertragung vom entspannten Turbinenabdampf auf das verdichtete Arbeitsfluid dienender Wärmetauscher angeordnet.
Außerdem ist zwischen der Arbeits- und der Kraftmaschine ein Arbeitsfluid-Speichergefäß angeordnet.
Derartige der Kühlung des verdichteten Arbeitsfluids dienende Wärmetauscherflächen sind ebenfalls in den einzelnen Stufen der Turboverdichteranlage angeordnet.

In einer besonderen Ausführungsform der Anordnung zur Durchführung des mehrstufigen Dampfkraft- und -arbeitsprozesses ist im Arbeitsfluid-Speichergefäß eine der Anlageninbetriebnahme dienende Verdampfungsanlage für das Arbeitsfluid angeordnet.

Eine weitere Ausführungsform der Anordnung zur Durchführung des mehrstufigen Dampfkraft- und -arbeitsprozesses sieht vor, zwischen Kraft- und Arbeitsmaschine eine der Regulierung eines konstanten Massestromes für die Verdichtungseinheit dienende Arbeitsfluidentnahmevorrichtung anzuordnen.

Eine mit den genannten Merkmalen ausgestattete Energieumwandlungsanlage ist durch eine Reihe von Vorteilen gekennzeichnet. Durch die ausschließliche Verwendung von überhitzten Wasserdampf als Arbeitsfluid lassen sich die bekannten physikalischen Vorteile dieses Arbeitsfluids für die einfache und kostengünstige Gestaltung der benötigten Anlagenkomponenten für die Durchfühung des Kreisprozesses nutzen.
Die unmittelbare Anordnung der Zuführungseinrichtungen für gasförmigen Wasserstoff und gasförmigen Sauerstoff an der Beschaufelung der einzelnen Stufen der Gasturbine ermöglicht es, unerwünschte Belastungsspitzen weitgehend auszuschließen und die erforderliche hohe Druck- und Temperaturbeständigkeit der eingesetzten Anlagenkomponenten auf die entsprechenden Turbinenstufen zu beschränken.

Die einheitliche Verwendung von überhitzten Wasserdampf als Arbeitsfluid für den Kreisprozeß erlaubt es außerdem, die vorteilhaften Kennwerte des Arbeitsfluids für die Anordnung vergleichsweise kleindimensionierter Wärmetauscherflächen zu nutzen.
Als Vorteil ist es auch zu betrachten, daß die zur Aggregatekühlung, zur Arbeitsfluid-Speicherung und zur Arbeitsfluid-Ausschleusung dienenden Komponenten ausschließlich für den Einsatz von überhitzten Wasserdampf oder Dampfkondensat auszulegen sind.
Damit bietet die vorgeschlagene Lösung insgesamt die Voraussetzung dafür, mit vergleichsweise geringem spezifischen Maschinenaufwand kompakte Energieumwandlungsanlagen hoher energetischer Effizienz zu schaffen.

Die Erfindung soll nachstehend mit einem Ausführungsbeispiel näher erläutert werden.
In der beigefügten Zeichnung zeigen:

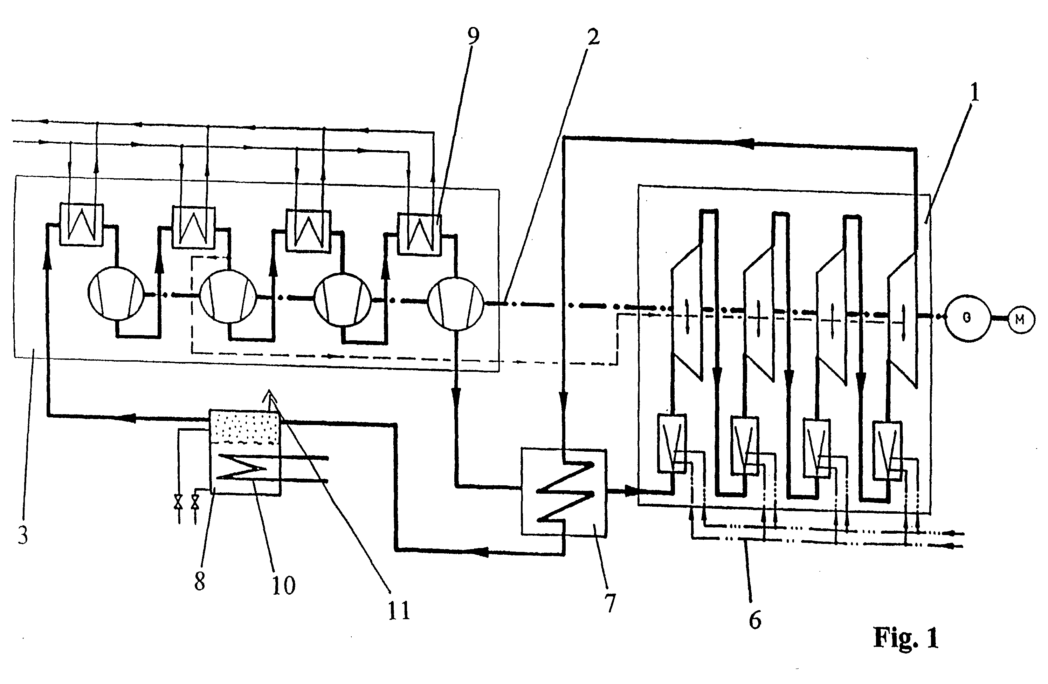

- **Fig. 1**: ein schematisches Blockschaltbild der Komponenten eines Kreisprozesses mit einem vierstufigen Turboverdichter, einer vierstufigen Gasturbine, einen Wärmetauscher für das Arbeitsfluid und einem Arbeitsfluid-Speichergefäß;

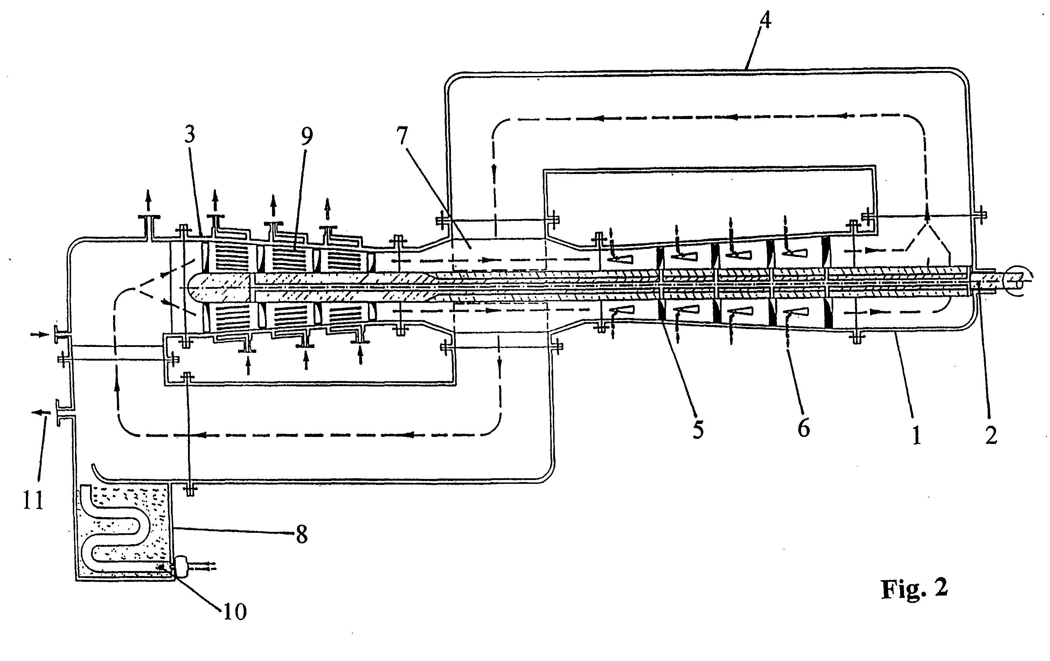

- **Fig. 2**: den schematischen Längsschnitt durch eine Energieumwandlungsanlage für die Elektroenergiegewinnung im Kreisprozeß mit einem auf der Welle einer vierstufigen Gasturbine angeordneten vierstufigen Turboverdichter.

### Ausführungsbeispiel:

In einer Energieurnwandlungsanlage, bestehend aus einer mehrstufigen Gasturbine 1 und einem Turboverdichter 3, soll im geschlossenen Kreisprozeß Elektroenergie gewonnen werden.

Dazu wird zunächst das in einem Arbeitsfluid-Speichergefäß 8 enthaltene Dampfkondensat durch Zuführung von Fremdenergie mittels einer Verdampfungsanlage 10 verdampft.
Der hier vierstufig ausgeführten Gasturbine 1 wird extern gespeicherter gasförmiger Wasserstoff und extern gespeicherter gasförmiger Sauerstoff über entsprechende Zuführeinrichtungen 6 direkt an die Beschaufelung 5 der einzelnen Turbinenstufen zugeführt. Der entstehende überhitzte Wasserdampf als Umsetzungsprodukt der Knallgasreaktion wird gemeinsam mit dem überhitztem Wasserdampf aus der Verdampfung des Inhalts des Arbeitsfluid-Speichergefäßes 8 dem auf der Turbinenwelle 2 angeordneten vierstufigen Turboverdicher 3 zugeführt. Die einzelnen Verdichterstufen werden durch Einsatz von Kühlmittel gekühlt. Der verdichtete Wasserdampf als Arbeitsfluid wird nach dem Verlassen des Turboverdichters 3 in einem Wärmetauscher 7 durch den die Gasturbine 1 verlassenden entspannten Wasserdampf vorüberhitzt und danach der Gasturbine 1 zugeführt, in der unmittelbar an der Beschaufelung der einzelnen Turbinenstufen die örtliche weitere Überhitzung und die partielle Druckerhöhung durch die Verbrennungsreaktion des dort zum Einsatz gebrachten Wasserstoffs und Sauerstoffs erfolgt. Die Kühlung der Turbinenwelle 2 und der Turbinenbeschaufelung 5 wird dabei durch Anteile des aus der Verdichtungsstufe ausgekoppleten Wasserdampf gesichert.
Das innige Gemisch des Arbeitsfluids in Form von überhitztem Wasserdampf mit Anteilen aus dem verdampften Dampfkondensat aus dem Arbeitsfluid-Speichergefäß 8 und aus dem bei der Knallgasreaktion entstehenden Wasserdampf wird in die verbindenden Rohrleitungen zwischen Gasturbine 1 und Turboverdichter 3 eingeleitet und beim Durchströmen des Wärmetauschers 9 durch das gekühlte und durch den Turboverdichter 3 verdichtete Arbeistfluid gekühlt.
Zur Regulierung des Massestromes des dem Turboverdichter 3 zugeführten Arbeitsfluids ist eine Arbeitsfluid- Entnahmevorrichtung 11 vorgesehen, mit deren Hilfe im Umfang der zusätzlich eingeführten Wasserdampfes dem Prozeß Arbeitsfluid entnommen wird, beispielsweise für externe Wärmenutzungen.
Eine derartige Aufgabe wird wenigstens teilweise durch die mögliche Abführung des für Kühlzwecke eingesetzten Wasserdampfes in der Gasturbine 1 erfüllt.

Schließlich wird auch das dem Turboverdichter 3 zugeführte Kühlmittel für externe Wärmenutzungen eingesetzt, so daß insgesamt ein gegenüber herkömmlichen Energieumwandlunsganlagen verbesserter Wirkungsgrad erreicht wird. Wegen des einheitlichen Einsatzes von überhitztem Wasserdampf von vergleichsweise geringem Druck und vergleichsweise niedriger Temperatur halten sich die maschinentechnischen Anforderungen an die Komponenten des Kreisprozesses in beherrschbaren Grenzen.

### Bezugszeichenliste

- 1: Mehrstufige Gasturbine
- 2: Turbinenwelle
- 3: Turboverdichter
- 4: verbindende Rohrleitungen
- 5: Beschaufelung
- 6: Zufühningseinrichtungen für gasförmigen Waserstoff und Sauerstoff
- 7: Wärmetauscher zwischen Turbinenabdampf und verdichtetem Arbeitsfluid
- 8: Arbeitsfluid-Speichergefäß
- 9: Wärmetauscherflächen im Turboverdichter
- 10: Verdampfungsanlage
- 11: Arbeitsfluidentnahmevorrichtung

## Patentansprüche

1. Mehrstufiger Dampfkraft-/ arbeitsprozeß für die Elektroenergiegewinnung im Kreisprozeß durch Einsatz eines zusätzlichen gasförmigen Energieträgers zur Druck-, Temperaturund Masseerhöhung des Arbeitsfluids im Kraftprozeß und Rückführung des Arbeitsfluids in den Arbeitsprozeß, *wobei der Kreisprozeß durchgehend mit Wasserdampf als Arbeitsfluid durchgeführt wird und die Umwandlung der gespeicherten Energie des Arbeitsfluides sowie des zusätzlichen gasförmigen Energieträgers in mechanische Energie mittels einer Gasturbinenanlage (1) vorgenommen wird und als zusätzliches dampfförmiges Arbeitsfluid das Umsetzungsprodukt der Knallgasreaktion aus der Verbrennung von Wasserstoff und Sauerstoff eingesetzt wird*, wobei der Kraftprozeß in einer geschlossenen mehrstufigen Gasturbinenanlage (1) durchgeführt wird, **dadurch gekennzeichnet,**
***daß*** *als zusätzlicher Energieträger Wasserstoff und Sauerstoff eingesetzt wird,*
**daß** das Arbeitsfluid als Kondensat vor der Inbetriebnahme und nach der Außerbetriebnahme zwischen Kraft- und Arbeitsmaschine (1, 3) in einem Arbeitsfluid- Speichergefäß (8) gespeichert wird,
**daß** das aus der inneren Verbrennung resultierende zusätzliche dampfförmige Arbeitsfluid zum Zwecke der Druck-, Temperatur- und Masseerhöhung des Arbeitsfluids direkt an der Beschaufelung (5) der mehrstufigen Gasturbine (1) zum Einsatz gebracht wird,
**daß** der eingesetzte Wasserdampf als Arbeitsfluid gemeinsam mit dem Umsetzungsprodukt aus der Knallgasreaktion der Verdichtungsstufe (3) des Kreisprozesses zugeführt wird und
**daß** die thermische Energie des entspannten Gasturbinenabdampfes teilweise mittels Wärmetauscher (7) zur Vorüberhitzung des verdichteten Heißdampfes als Arbeitsfluid verwendet wird.

2. Mehrstufiger Dampfkraft-/arbeitsprozeß nach dem Anspruch 1, **dadurch gekennzeichnet, daß** das Arbeitsfluid zwischen Arbeits- und Kraftmaschine (3, 1) in einem Arbeitsfluid-Speichergefäß (8) durch Energiezuführung vor Inbetriebnahme verdampft wird.

3. Mehrstufiger Dampfkraft-/arbeitsprozeß nach einem der Ansprüche 1 und 2, **dadurch gekennzeichnet, daß** das überschüssige Arbeitsfluid, welches der Menge des aus der Verbrennungsreaktion von Wasserstoff und Sauerstoff entstehenden Wasserdampfes entspricht, zwischen der Kraftmaschine (1) und der Arbeitsmaschine (3) aus dem Kreisprozeß entnommen wird.

4. Mehrstufiger Dampfkraft-/arbeitsprozeß nach einem der Ansprüche 1 bis 3, **dadurch gekennzeichnet, daß** überschüssige Anteile der gewonnenen elektrischen Energie zur Erzeugung von Wasserstoff und Sauerstoff eingesetzt werden.

5. Mehrstufiger Dampfkraft-/arbeitsprozeß nach einem der Ansprüche 1 bis 4, **dadurch gekennzeichnet, daß** zum Zwecke der Wellen- und Schaufelkühlung der Gasturbine (1) ausgekoppelter Wasserdampf aus der Verdichtungsstufe (3) des Kreisprozesses verwendet wird.

6. Anordnung zur Durchführung des mehrstufigen Dampfkraft-/-arbeitsprozesses gemäß der Ansprüche 1 bis 5, bestehend aus einer mehrstufigen Gasturbine (1) als Kraftmaschine und einem auf der Turbinenwelle (2) angeordneten mehrstufigen Turboverdichter (3) als Arbeitsmaschine mit verbindenden Rohrleitungen (4) zur Kreislaufführung des Arbeitsfluids, **dadurch gekennzeichnet,**
**daß** an den einzelnen Turbinenstufen in unmittelbarer Nähe der Beschaufelung (5) Zuführungseinrichtungen (6) für gasförmigen Wasserstoff und gasförmigen Sauerstoff angeordnet sind,
**daß** zwischen der Arbeits- und der Kraftmaschine (1, 3) ein zur Wärmeübertragung vom entspannten Turbinenabdampf auf das verdichtete Arbeitsfluid dienender Wärmetauscher (7) angeordnet ist, daß zwischen der Arbeits- und der Kraftmaschine (1, 3) ein Arbeitsfluid-Speichergefäß (8) angeordnet ist und
**daß** in den einzelnen Stufen der Turboverdichteranlage (3) der Kühlung des verdichteten Arbeitsfluids dienende Wärmetauscherflächen (9) angeordnet sind,

7. Anordnung zur Durchführung des mehrstufigen Dampfkraft-/-arbeitsprozesses nach dem Anspruch 6, **dadurch gekennzeichnet, daß** im Arbeitsfluid-Speichergefäß (8) eine der Anlageninbetriebnahme dienende Verdampfungsanlage (10) für das Arbeitsfluid angeordnet ist.

8. Anordnung zur Durchführung des mehrstufigen Dampfkraft-/-arbeitsprozesses nach einem der Ansprüche 6 und 7, **dadurch gekennzeichnet, daß** zwischen Arbeits- und Kraftmaschine (1, 3) eine der Regulierung eines konstanten Massestromes für die Verdichtungseinheit (3) dienende Arbeitsfluidentnahmevorrichtung (11) angeordnet ist.

## Claims

1. Multi-stage steam-power/work process for generating electrical energy in a cyclic process by using an additional gaseous energy source to increase pressure, temperature and mass of the working fluid in the power process and for returning the working fluid into the work process, wheras the cyclic process is continously driven by steam as working fluid and the transformation of the stored energy of the working fluid as well as of the additional gaseous energy source into mechanical energy is done by a gas turbine processor (1) and the solidified product resulting from the detonating gas reaction resulting from the combustion of hydrogen and oxygen is being used as additional vaporous working fluid wheras the work process is accomplished in a closed multi-stage gas turbine processor (1), being **characterized by**:
- The inserting of hydrogen and oxygen as additional energy sources
- The collecting of the working fluid as condensate in an accumulator (8) between the power cycle and the work cycle (1, 3) before the initiation and after the shut down of the processor
- The use of the additional vaporous-like working fluid resulting from the internal combustion of hydrogen and oxygen for increasing the pressure, temperature and mass of the working fluid directly on the blading (5) of the multi-stage gas turbine (1)
- The fed steam as working fluid together with the solidified product from the detonating gas reaction is inserted to the compressor stage (3) of the cyclic process
- The thermal energy of the expanded steam of the gas turbine is used partially by a heat exchanger for pre-overheating the compressed steam as working fluid.

2. Multi-stage steam-power/work process refering to claim 1, being **characterized by** the vaporization of the working fluid in an working fluid accumulation tank between the work and power machine (3, 1) by feeding energy before initiation.

3. Multi-stage steam-power/work process refering to claims 1 and 2, being **characterized by** the extraction of the surplus working fluid between the power machine (1) and the work machine (3), which equals the amount of resulting steam from the combustion of hydrogen and oxygen.

4. Multi-stage steam-power/work process refering to claims 1 - 3, being **characterized by** the use of the surplus generated electric energy to produce hydrogen and oxygen.

5. Multi-stage steam-power/work process refering to claims 1 - 4, being **characterized by** the use of extracted steam from the compression stage (3) of the cyclic process for purposes of the blade and shaft cooling of the gas turbine (1).

6. Arrangement for the realization of the multi-stage steam power/work process refering to claims 1 - 5, consisting of of a multi-stage gas turbine (1) for power machine and of a multi-stage turbo compressor (3) which is located on the turbine shaft (2) for the work machine as well as piping (4) for process control of the working fluid, being **characterized by**:
- A heat exchanger (7) which is placed between the work an power machine (1, 3) for heat transmission from the expanded turbine steam to the compressed working fluid
- A working fluid accumulation tank between the work and power machine (1, 3) and
- Heat exchanger surfaces (9) which are used for cooling the compressed working fluid, that are arranged in every single stage of the turbo compressor (3).

7. Arrangement for the realization of the multi-stage steam power/work process refering to claim 6, being **characterized by** a vaporization processor for the working fluid, which is placed in the accumulator for initiating the processor.

8. Arrangement for the realization of the multi-stage steam power/work process refering to claims 6 and 7, being **characterized by** an appliance for extracting the working fluid (11) between the power and work machine (1, 3) to regulate a constant mass flow of the compressing unit (3).

## Revendications

1. Un procédé à force de vapeur / procédé de travail à plusieurs niveaux qui permet d'extraire de l'énergie électronique du procédé de circulation en utilisant une matière énergétique gazeuse auxiliaire afin d'augmenter la pression, la température et la masse du fluide de travail dans le procédé moteur et de renvoyer le fluide dans le procédé de travail.
Le principe de « circulation » s'exécute en continu grâce à la vapeur d'eau qui sert de fluide de travail.
L'énergie accumulée par le fluide de travail ainsi que par la matière énergétique gazeuse auxiliaire est transformée en énergie mécanique par un dispositif de turbines à gaz (1). Le produit de la transformation, issu de la réaction du gaz détonant, est utilisé à l'état de vapeur comme fluide supplémentaire.
Le procédé moteur s'effectue dans un dispositif fermé de turbines à gaz (1) à plusieurs niveaux ; que de l'oxygène et de l'hydrogène servent de sources d'énergie supplémentaires ; que le fluide de travail est conservé en tant que produit condensé avant et après la mise en exploitation entre le procédé moteur et le procédé de travail (1, 3) clans un réservoir étant destiné à la conservation du fluide de travail (8) ; que le fluide de travail à l'état de vapeur qui résulte complémentairement de la combustion interne sert à augmenter la pression, la température et la masse du fluide de travail directement au niveau du procédé de charge (5) de ladite turbine à gaz (1) ;
que la vapeur d'eau utilisée est amenée au procédé de circulation en tant que fluide de travail ainsi que le produit de transformation issu de la réaction de gaz détonnant au niveau de la compression (3) et
que l'énergie thermique de la vapeur des turbines à gaz à l'état de détention est partiellement utilisée comme fluide de travail pour le sur-chauffage de la vapeur chaude comprimée par des « échangeurs de chaleur»(7).

2. Procédé à force de vapeur/procédé de travail à plusieurs niveaux comme il est indiqué sous n. 1, qui est **caractérisé par** la transformation en vapeur de fluide de travail entre la machine de travail et la machine moteur (31) dans un réservoir destiné à conserver ledit fluide en ajoutant de l'énergie avant la mise en exploitation.

3. Procédé à force de vapeur/procédé de travail à plusieurs niveaux comme il est indiqué sous n. 1 et 2, qui est **caractérisé par** l'extraction du fluide de travail supplémentaire entre la machine moteur (1) et la machine de travail (3), qui correspond au volume de la vapeur d'eau extraite de la réaction de combustion de l'oxygène et de l'hydrogène du procédé de circulation.

4. Procédé à force de vapeur/procédé de travail à plusieurs niveaux comme il est indiqué sous n. 1 à 3, qui est **caractérisé par** l'utilisation des parts supplémentaires de l'énergie électrique gagnée pour la production de l'oxygène et de l'hydrogène.

5. Procédé à force de vapeur/procédé de travail à plusieurs niveaux comme il est indiqué sous n. 1 à 4, qui est **caractérisé par le fait que** la vapeur d'eau tirée du procédé de circulation au niveau de la compression (3) sert de réfrigérant de la pelle et des ondes de la turbine à gaz (1).

6. Disposition pour la réalisation du procédé à force de vapeur/procédé de travail à plusieurs niveaux comme il est indiqué sous n. 1 à 5, comprenant une turbine à gaz à plusieurs niveaux (1) en tant que machine moteur et une turbomachine de compression (3) étant placée sur une onde de turbine (2) en tant que machine de travail qui est liée à la circulation du fluide de travail par des tuyauteries, qui est **caractérisé par le fait qu'**aux niveaux des turbines différents se trouvent tout près de la pelle (5) des installations qui amènent de l'oxygène et de l'hydrogène à l'état de vapeur,
qu'entre la machine de travail et la machine moteur (1, 3) un échangeur de chaleur (7) est installé afin de transmettre la chaleur de la vapeur des turbines à gaz à l'état de détention au fluide de travail comprimé ;
qu'entre la machine de travail et la machine moteur (1, 3), un réservoir destiné à conserver le fluide de travail (8) est installé et
qu'aux niveaux différents de la turbomachine de compression (3) sont installées des superficies pour l'échange de chaleur (9) qui servent à réfrigérer le fluide de travail comprimé.

7. Disposition pour la réalisation du procédé à force de vapeur/procédé de travail à plusieurs niveaux comme il est indiqué sous n. 6, qui est **caractérisé par** l'installation d'une machine transformant le fluide de travail en vapeur (10) qui sert de la mise en exploitation du procédé dans le réservoir destiné à conserver le fluide de travail (8).

8. Disposition pour la réalisation du procédé à force de vapeur/procédé de travail à plusieurs niveaux comme il est indiqué sous n. 6 et 7, qui est **caractérisé par** l'installation d'un dispositif entre la machine de travail et la machine moteur (1, 3) qui est destiné à l'extraction du fluide de travail (11) et aide à la régulation d'un courant de masse constant pour l'unité de la compression (3).
